Europäisches Patentamt

European Patent Office

Office européen des brevets

(11) Publication number: **0 513 542 A2**

## EUROPEAN PATENT APPLICATION

(21) Application number: **92106568.6**

(22) Date of filing: **16.04.92**

(51) Int. Cl.5: **C08L 1/28**, C08L 71/02,
//(C08L1/28,25:06,101:00),
(C08L71/02,25:06,101:00)

(30) Priority: **23.04.91 US 690106**
**05.03.92 US 847960**

(43) Date of publication of application:
**19.11.92 Bulletin 92/47**

(84) Designated Contracting States:
**AT BE CH DE DK ES FR GB GR IT LI LU MC
NL PT SE**

(71) Applicant: **Petcavich, Robert J.**
**4136 Palisades Road**
**San Diego, California 92116(US)**

(72) Inventor: **Petcavich, Robert J.**
**4136 Palisades Road**
**San Diego, California 92116(US)**

(74) Representative: **Flosdorff, Jürgen, Dr.**
**Alleestrasse 33**
**W-8100 Garmisch-Partenkirchen(DE)**

(54) **Disposable recyclable plastic articles and moldable synthetic resin blends for making the same.**

(57) Environmentally friendly, disposable, degradable and/or recyclable plastic articles, which take the place of environmentally unfriendly styrofoam, are molded from synthetic resin blends comprised of 65% to 95% of water soluble thermoplastic resin having an inverse solubility characteristic and about 35% to 5% of resins and fillers that are functionally compatible with the water soluble resin. The articles are insoluble when they contain a hot beverage or food but become soluble when exposed to tepid or cool water.

The inversely soluble resin may be high molecular weight poly(ethylene oxide) or hydroxypropylcellulose, and mixtures thereof. By appropriate selection of the compatible resin and the ratio of the compatible resin to the inversely soluble resin, solubility time may be varied from minutes to weeks. The articles can be dissolved in water or by the moisture in a landfill, or can be recycled by dissolution in cool water, thereby eliminating the trash and garbage problems inherent in the use of nondegradable styrofoam.

### Field of the Invention

The present invention relates to disposable plastic articles, such as the foam containers used in fast food restaurants, and resin blends from which they are manufactured.

### Cross Reference

The present application in a continuation-in-part of copending application Serial No. 07/690,106, filed April 23, 1991.

### Background

Fast food restaurants, snack bars and convenience stores customarily serve coffee, cocoa, tea and soup in disposable styrofoam cups or containers. These cups retain the heat of the contained liquid and insulate the consumer's hand from the hot liquid so that the beverage or soup can be carried about and consumed in relative comfort while hot.

Due to their extremely low cost, the cups can simply be thrown away folowing use, so that the consumer does not have to return the cup and the proprietor does not have to wash it. Because of these characteristics, styrofoam cups and containers are very popular and not readily displaceable in terms of consumer appeal and demand.

Also, fast food restaurants frequently prepare their hot food items in anticipation of expected trade so that when a patron enters the facility or drives up to the drive through service window, the food is ready to be served instantly. In order to keep the food at a desirable eating temperature in the interval between preparation and serving, which may be as much as a half-hour or more, it has been customary in the fast food business to utilize disposable styrofoam food containers, such as the well-known clam shell container, for purposes of thermal insulation, attractive presentation of the product to the consumer and economy in packaging.

Styrofoam is also widely used as a packaging material and for the manufacture of various other articles.

However, styrofoam is not degradable and is not readily or economically recyclable. Consequently, styrofoam cups and containers and the like have become an environmental hazard to our society. (See, e.g., The Wall Street Journal, 11/2/90, p. A3). As a recent public service advertisement (Time, 12/17/90, p. 101) stated the case, styrofoam is forever; it will never decompose, never disintegrate, never go away; and neither will the garbage problems it creates unless we find solutions.

The object of the present invention is to provide a solution.

### Summary of the Invention

An object of the present invention is to provide articles of manufacture, and synthetic resin blends for making articles of manufacture, that have all of the advantages of styrofoam but are degradable and recyclable.

Another object of the invention is to provide cups and containers for prepared food and beverage products that are simple and economical to make on standard container manufacturing equipment, that can be imprinted for decorative and informational purposes, that will physically protect and thermally insulate the contained food or beverage, that will provide for attractive presentation of the product to the patron, that will be very economical, and most importantly, will be degradable and recyclable.

In accordance with the invention, degradable and recyclable articles of manufacture, especially intended for replacement of comparable styrofoam articles of manufacture, are made from a resin blend comprised essentially of from about 65% to about 95% of water soluble thermoplastic resin having an inverse solubility characteristic and from about 35% to about 5% of at least one functionally compatible resin. Functionally compatible fillers and foaming agents may also be added to the blend if desired.

The inversely soluble resins presently known for practice of the invention are comprised of high molecular weight poly(ethylene oxide), hereinafter sometimes referred to as "PEO", high molecular weight hydroxypropylcellulose, hereinafter sometimes referred to as "HPC", and mixtures of the same.

PEO and HPC have a negative or inverse water solubility characteristic. They will not dissolve or melt in the presence of hot liquids having a temperature near the boiling point of water but will rapidly dissolve in cool or cold water. The rate of dissolution is so rapid, that a cup of coffee cannot be consumed in a customary period of time without at least partial dissolution of the cup, resulting in the liquid leaking from the cup and making a mess. Therefore, PEO and HPC have not heretofore been used as a beverage container, or for any other of the applications herein contemplated.

The present invention resides in the discovery that the addition of one or more selected thermoplastic resins to PEO and/or HPC results in a moldable synthetic resin blend having a controlled or controllable rate of dissolution in water. By proper selection of a functionally compatible resin and by proper adjustment of the ratio of the compatible resin to the inversely soluble resin, solubility time can be varied from several minutes, to several hours, to days and to weeks. In accordance with the invention, the ratio of the compatible resin or resins, together with fillers and foaming agents if desired, is in the order of from about 5% to about 35% of the resin blend, the balance comprising PEO and/or HPC. Generally speaking, the higher the percentage of the compatible resin, the longer is the dissolution time.

Therefore, cups, containers and other articles heretofore made of nondegradable styrofoam may now be molded or extruded from a material that is soluble in water over a preselected period of time, and that will leave behind only a harmless powder occupying only an infinitesimal fraction of the space that would be occupied in a landfill by a comparable styrofoam product. Also, if a container of the invention falls overboard from a boat, it will quickly dissolve in the water leaving little or no discernable trash or garbage behind.

Moreover, cups, containers and other articles made in accordance with the invention can be recycled with particular ease and at great economy. The article need only be placed in cool or cold water, either fresh water or salt water, to dissolve the article, whereupon the compatible resin and filler materials will either float to the surface or settle out in the water, whereupon they can be recovered and reclaimed. Thereafter, the water can be heated to near boiling, which will cause the water soluble resin, i.e., the poly(ethylene oxide) and/or hydroxypropylcellulose to be precipitated out of the water, whereupon it too can be recovered and reclaimed, leaving behind only clear water.

Thus, the invention provides environmentally friendly and ecologically advantageous solutions to the styrofoam trash and garbage problems.

These and other objects and advantages of the invention will become apparent from the following detailed description.

## Detailed Description

The following is a detailed description of the best mode presently contemplated by the inventor for carrying out the invention. Drawings are not deemed necessary to a full disclosure of the invention inasmuch as the articles of manufacture presently contemplated for practice of the invention and the manner of making the same are notoriously old and well known in the art. Examples of such articles include molded foam and plastic beverage cups and drink containers, molded clam shell containers for prepared food products, food service utensils such as picnic plates, egg cartons, containers or pots for plants to be planted in the ground, disposable personal hygiene products, disposable diapers, and the styrofoam packaging material known as "peanuts".

In accordance with the invention, such articles are molded or extruded under heat and pressure from a synthetic resin blend comprised of from about 65 to about 95 weight percent, i.e., percent by weight of water soluble thermoplastic resin having an inverse solubility characteristic and about 35 to about 5 weight percent of one or more thermoplastic resins that are functionally compatible with the inversely soluble resin. Fillers and foaming agents may also be added, if desired.

The water soluble resin having an inverse solubility characteristic is selected from the group comprising high molecular weight poly(ethylene oxide) ("PEO"), high molecular weight hydroxypropylcellulose ("HPC"), and mixtures thereof.

Thermoplastic resins that are functionally compatible with the water soluble resin include polystyrene, polyethylene, polypropylene, acrylonitrile-butadiene-styrene (ABS from General Electric Co.), polyvinylchloride, polyester, polycarbonate, polymethyl methacrylate and thermoplastic elastomers such as ethylene-propylene copolymers, ethylene-propylene-diene copolymers, polyurethane and polydienes. For food and beverage applications, all of these resins can be obtained in FDA approved form from companies such as Dow, DuPont, Shell, General Electric and BF Goodrich.

Compatible fillers which may be added in amounts up to about 5 weight percent, include glass microspheres, polymer microspheres, cornstarch, wood flour, paper and mixtures thereof.

If it is desired to produce a foam container or article, a foaming or blowing agent, such as calcium carbonate or sodium bicarbonate, may be added to the resin blend in an amount from about 0.5 to about 2.5 weight percent. Alternatively, a gas, such as nitrogen, may be directly injected into the resin blend as it is being extruded or fed into a mold.

Resin blends formulated as above described are food contact compatible, biologically inert and readily processed under heat and pressure. They are extrudable, and they are moldable by either injection molding or extrusion molding. The blends are therefore ideal for economical mass production of disposable consumer products. Because the demand for poly(ethylene oxide) and hydroxypropylcellulose is relatively low at the time of this writing, the price is somewhat high, but it is anticipated that practice of the present invention will sufficiently increase production to result in a price that is competitive with the resins presently being used for manufacture of commercially available articles. At the time of this writing, considerations of cost and ease of fabrication indicate a preference for PEO over HPC.

High molecular weight PEO and HPC each have a negative or inverse solubility characteristic. They are soluble in cold and warm water, either fresh or salt water, but insoluble in hot water approaching the boiling point. They and mixtures thereof therefore lend themselves well to sterilization and to use in connection with hot beverages and foods. Also, for purposes of recycling, they eliminate the need for expensive and hazardous solvents, since they are completely soluble in ordinary cold or cool water.

The resin blends of the present invention take full advantage of this inverse solubility characteristic and at the same time eliminate the problems that are consequent upon the fact that the resins themselves are too readily and rapidly soluble in the presence of water and water based beverages, such as cool or cold coffee, tea and cocoa. By blending a major proportion of the inversely soluble resin with a minor proportion of a functionally compatible thermoplastic polymer, the solubility or dissolution time of articles molded from the resin blends can be controlled within an extremely broad range of time durations, ranging from minutes to weeks. Generally speaking, the higher the proportion of thermoplastic polymer the longer will be the solubility time.

The ratio of the thermoplastic polymer to the inversely soluble resin is quite critical. Too little thermoplastic polymer results in an unstable end product that is too soluble for most consumer applications. Too much thermoplastic results in a product that will not dissolve within a reasonable period of time. To the contrary, the product has a tendency to absorb water and swell up, creating as much or more of a trash problem than styrofoam.

Empirical observations to date indicate that the weight percent of thermoplastic polymer in the resin blend should not exceed in the order of about 35%, nor be any less than in the order of about 5%. Experimentation with foam beverage cups made from a 60/40 blend of poly(ethylene oxide) and polystyrene resulted in a cup that absorbed water, but did not dissolve. In contrast, foam beverage cups made from a 80/20 blend of PEO and polystrene resulted in excellent coffee containers which dissolved in 18 to 24 hours in fresh water at room temperature and in only about 9 hours in Pacific Ocean water. The only solid waste left behind was a thin particulate layer of polystyrene.

For recycling purposes, therefore, the invention provides a recycling process comprised of the steps of collecting used or discarded articles made in accordance with the invention, immersing a batch of the same in water, preferably cool ocean water, agitating the water and the articles therein until the articles are dissolved, recovering and drying the solid thermoplastic resin which floats to the surface of or precipitates out of the water, bringing the water up to a temperature near boiling to cause the inversely soluble resin to precipitate out of the water, recovering and drying the solid precipitate, reusing the recovered inversely soluble resin and compatible polymer, and recycling the water to the next batch of articles to be dissolved. By practice of this process, articles made in accordance with the invention are 100% recyclable.

The soluble beverage cups above described were extrusion molded from a resin blend comprised of approximately 80 weight percent of poly(ethylene oxide), approximately 20 weight percent of polystyrene and about 1/2 to 1 weight percent of a chemical foaming or blowing agent sold under the tradename Celogen-AZNP by Uniroyal Chemical Co., Middlebury, Connecticut. The resins and the blowing agent were blended together with the extruder. The extruder was operated at temperatures of about 250° F. at the rear, about 350° F. at the center and about 350° to 400° F. at the front or injection Zone. The injection pressure was about 1,000 psi. The molded cups have essentially the same physical appearance as a sytrofoam cup, but with smoother, slightly glossy and aesthetically attractive surfaces.

Soluble beverage cups having essentially the same characteristics have also been molded in like manner from a resin blend of about 80 weight percent of hydroxypropylcellulose and about 20 weight percent of polystyrene.

The poly(ethylene oxide) used in practice of the invention is a high molecular weight resin available from Union Carbide Corporation, Danbury, Connecticut, under the trademark POLYOX, from Meisei Chemical Works Ltd. (Japan) under the trademark ALKOX and from Seitetsu Kagaku Co. Ltd. (Japan) under the acronym PEO. It is a dry free flowing white powder having a crystaline melting point in the order of about 65° C., above which the resin becomes thermoplastic and can be formed by molding, extrusion or calendering. A specially formulated compound, based on a medium high molecular weight poly(ethylene oxide) resin, is available from Union Carbide Corporation for use in thermoplastic applications including extrusion and molding. The exact composition of this compound, WRPA-3154, is proprietary, but it is known to contain plasticizers and stabilizers helpful in thermoplastic forming operations. The melt viscosity at temperatures 100 to 150° C. above the melting point is very high and it is therefore necessary to incorporate a plasticizing agent in the resin to achieve practical processing conditions.

The molecular weight of the PEO used in practice of the invention, as set forth in the Union Carbide POLYOX literature filed contemporaneously with the above-identified parent application, ranges from about 100,000 up to about 5,000,000; perhaps more realistically within the range of about 150,000 to 350,000.

Extensive testing with laboratory animals by Union Carbide Corporation and of a variety of marine life by the U.S. Naval Undersea Center indicates that poly(ethylene oxide) resins have a very low level of oral toxicity. They are not readily absorbed from the gastrointestinal tract. The resins are relatively nonirritating to the skin and have a low sensitizing potential. They caused only trace eye irritation when rabbits eyes were flooded with a 5% aqueous solution of the resin. There was little or no effect on the death rate of fish, crabs, sea anemone, lerine shrimp, or algae when exposed to resin concentrations ranging from 250 to 2,000 parts per million for periods of three to fifty days. Hence, both the dry resin as well as aqueous resin solutions have a low level of toxicity and can be handled safely.

The U.S. Food and Drug Administration recognizes the use of Union Carbide's resins in certain food and related applications.

High molecular weight poly(ethylene oxide) resins have a very low level of biodegradability. Data on the biochemical oxygen demand (BOD) as a function of concentration in aqueous solution confirm this. Union Carbide's resins are approved by the U.S. Environmental Protection Agency for unrestricted use as an inert ingredient in pesticide formulations applied to crops up to the time of harvest.

Hydroxypropylcellulose resins having a molecular weight within the range of about 100,000 to 5,000,000 exhibit characteristics very similar to those above described for high molecular weight PEO. HPC resins suitable for use in practice of the present invention are available from Aqualon Company, Wilmington, Delaware, under the trademark "Klucel". They are also believed to be available from Nippon Soda KK of Japan under the name "Nisso HPC".

PEO and HPC are completely soluble in water over a broad pH range at all temperatures up to about 90° C. At or near the boiling point of water, they precipitate from solution. This phenomenon of inverse solubility provides a convenient technique for dispersing and dissolving these resins. In particular, disposal or recovery of the resins is convenient because of the complete water solubility and low biological oxygen demand. Nevertheless, even though the resins are completely water soluble, they are relatively resistant to sorption of atmospheric moisture at all but the highest relative humidities. Therefore, until immersed in cold or warm water, articles of manufacture made in accordance with the present invention will enjoy an entirely satisfactory shelf life prior to use.

The objects and advantages of the invention have therefore been shown to be attained in a convenient, economical, practical and facile manner.

At the time of this writing, there are no other resins known to be the same as or equivalent to PEO or HPC, or at least none known to the herein named inventor. However, if equivalent water soluble thermoplastic resins having inverse temperature solubility characteristics are developed, it would appear obvious to use the same in practice of the present invention.

Therefore, while preferred embodiments of the invention have been herein described, it is to be appreciated that various changes, rearrangements and modifications may be made therein without departing from the scope of the invention as defined by the appended claims.

## Claims

1. A moldable synthetic resin blend for making disposable, degradable, recyclable plastic articles comprising in the order of from about 65% to about 95% water soluble thermoplastic resin having an inverse solubility characteristic and in the order of from about 35% to about 5% of at least one thermoplastic resin that is functionally compatible with said water soluble resin.

2. A resin blend as claimed in Claim 1, wherein said water soluble resin is selected from the group comprising high molecular weight poly-(ethylene oxide), high molecular weight hydroxypropylcellulose, and mixtures thereof.

3. A resin blend as claimed in any of the preceding claims, wherein said at least one functionally compatible resin comprises a thermoplastic resin selected from the group comprising polystyrene, polyethylene, polypropylene, acrylonitrile-butadiene-styrene, polyvinylchloride, polyester, polycarbonate, polymethyl methacrylate and thermoplastic elastomers.

4. A resin blend as claimed in any of the preceding claims, including up to about 5% of at least one functionally compatible filler.

5. A resin blend as claimed in Claim 4 wherein said filler is selected from the group comprising glass microspheres, polymer microspheres, cornstarch, wood flour, paper and mixtures thereof.

6. A resin blend as claimed in any of the preceding claims which is comprised of in the order of about 80% of said water soluble resin and in the order of about 20% polystyrene.

7. A resin blend as claimed in any of the preceding claims, including from about 1/2 to about 2 1/2% of a foaming agent.

8. A disposable, degradable, recyclable plastic article of manufacture formed from the synthetic resin blend claimed in any of the preceding claims.

9. An article of manufacture as claimed in Claim 8, wherein the article is comprised of in the order of about 80% of said water soluble resin and in the order of about 20% polystyrene.

10. An article of manufacture as claimed in Claim 9, including a foaming agent.

11. A method of making disposable, degradable, recyclable plastic articles of manufacture comprising the steps of processing the constituents of the synthetic resin blend claimed in any of Claims 1 to 7 under heat and pressure and forming articles therefrom.

12. A method as claimed in Claim 11, wherein the articles are formed by extrusion under heat and pressure and the constituents of the resin blend are blended together by the extruding step.

13. A method as claimed in Claim 11 or 12, including the step of injecting a foaming agent into the resin blend.

14. A method for recycling the article of manufacture claimed in any of Claims 8 to 10, comprising the steps of dissolving the article of manufacture in water, recovering and recycling the functionally compatible thermoplastic resin, heating the water and the water soluble resin dissolved therein to a temperature just below the boiling point of the water to precipitate the inversely soluble resin out of the water, and recovering and recycling the precipitate.